# EUROPÄISCHE PATENTSCHRIFT

(11) **EP 0 755 987 B1**
(45) Veröffentlichungstag und Bekanntmachung des Hinweises auf die Patenterteilung: **02.06.1999**
(21) Anmeldenummer: 96111849.4
(22) Anmeldetag: 23.07.1996
(51) Int. Cl.: C09D 9/04, C11D 7/50

(54) **Farbentfernungsmittel**
Paint remover
Agent décapant

(30) Priorität: 24.07.1995 EP 95111578
(43) Veröffentlichungstag der Anmeldung: 29.01.1997
(73) Patentinhaber: CFM GmbH chemo-technische produkte, 84453 Mühldorf (DE)
(72) Erfinder: Bleyl, Ulrich, 84570 Polling (DE); Fleischmann, Horst, 84487 Burghausen (DE)
(74) Vertreter: DIEHL GLAESER HILTL & PARTNER

(56) Entgegenhaltungen:
- EP-A- 0 389 829
- EP-A- 0 442 271
- EP-A- 0 604 372
- WO-A-92/05224
- DE-A- 4 034 765
- DATABASE WPI Section Ch, Week 9247 Derwent Publications Ltd., London, GB; Class A21, AN 92-385314 XP002017354 & JP-A-04 283 240 (NISHIYAMA STAINLESS CHEM KK) , 8.Oktober 1992

## Beschreibung

Die Erfindung betrifft Farbentfernungsmittel, insbesondere solche Mittel mit egalisierender und konditionierender Wirkung gegenüber dem farbtragenden Substrat. Bei diesem handelt es sich z.B. um Gummi, Eisen- und Nichteisenmetalle, Mauerputze, Ziegel, Holz, Natur- und Kunststeine, Beton sowie Kunststoffe verschiedener Art. Bevorzugte Anwendungsgebiete für die Farbentfernungsmittel sind das Entfernen von unerwünschten Graffiti-Bemalungen an Hauswänden usw. sowie von Farben an Sieben und Schablonen für Siebdruckmaschinen.

Nachdem bis zum Beginn der 80er Jahre bei Farbentfernern und Abbeizern hauptsächlich Methylenchlorid, Phenole und Methanol als Wirksubstanz verwendet wurden, setzte sich in der Folgezeit auch in diesem Bereich die Erkenntnis durch, daß Wirkstoffe verwendet werden sollten, die ein wesentlich geringeres Schädigungspotential für Anwender und Umwelt haben.

So wird im Jahrbuch für den Praktiker, Jahrgang 1987, Seite 105/106, Verlag für chemische Industrie H. Ziolkowsky GmbH, Augsburg, auf die DE 3438399 hingewiesen. In dieser Patentschrift wird ein abdeckungsmittelfreies, insbesondere wachsfreies Entlackungsmittel zur Entschlichtung von Gebäudefassaden- und Wandanstrichen beschrieben, welches als hauptsächliche Wirkungskomponenten ein Gemisch aus Dicarbonsäuremethylestern (im Handel erhältlich von Du Pont unter der Handelsbezeichnung "Dibasic Ester - DBE") und Butyldiglykol enthält.

Aus Firmenschriften von Du Pont sind weiterhin Abbeizformulierungen bekannt, die neben der bereits oben erwähnten Komponente "Dibasic Ester" auch N-Methylpyrrolidon und aromatische sowie naphthenische Kohlenwasserstoffe enthalten. Hierzu wird im Jahrbuch für den Praktiker, Jahrgang 1989, Seite 58, die Rezeptur für einen "Household Paint Stripper and Varnish Remover" beschrieben, der eben diese Hauptkomponenten enthält.

Ferner gibt es auf diesem Fachgebiet die Veröffentlichung von H.L. Jackson aus dem Du Pont-Versuchslabor in Wilmington, Delaware (USA), "DBE-based stripper formulations", zur Gefahrenverringerung beim Abbeizen (Protokoll einer internationalen Konferenz in Washington DC vom 12. - 13.2.1991, Seiten 173 - 176), sowie den Consumer Report von 1991, 565 340-3, "Paint Removers = New Products Eliminate old Hazards". Weitere einschlägige Druckschriften sind die US 4673524, die US 4927556, die EP-A 389829, die GB 2191501 und die DE 4025039.

Als Zusammenfassung dieser durch Patente und andere Veröffentlichungen beschriebenen Entwicklung ist festzustellen, daß die derzeitigen Farbentfernungs- und Abbeizmittel als hauptsächliche Wirksubstanzen das Handelsprodukt Dibasic Ester, N-Methylpyrrolidon und Alkyldiglykole enthalten.

In den genannten Druckschriften liegen jedoch neben anderen Komponenten immer zwei dieser hauptsächlichen Wirksubstanzen vor.

Im Bereich der Siebdrucktechnik werden an Sieben, Schablonen usw. anhaftende Druckfarben überwiegend mit aromatischen Lösemitteln (z.B. Toluol, Xylol, Cumol und Mesitylen) entfernt. Dies geschieht teilweise an der Siebdruckmaschine oder nach dem Druckvorgang in einer Siebwaschanlage, an die meist eine Destillationsvorrichtung zum Rückgewinnen der Lösemittel angeschlossen ist. Da die verwendeten Lösemittel alle der Verordnung für brennbare Flüssigkeiten unterliegen, rasch verdampfen und wasserunlöslich sind, müssen umfangreiche Sicherheitsvorkehrungen in Siebdruckbetrieben realisiert sein, um Gefährdungen der Arbeitskräfte, der Umgebung sowie der Anlagen auszuschließen. Trotz solcher Maßnahmen werden dort aber Menschen und Umwelt in hohem Maße mit Lösemitteldämpfen belastet.

Aus WO-A-9 003 419 ist bekannt, daß C₁₋₄-Alkylester von aliphatischen C₈₋₂₂-Monocarbonsäuren zur Entfernung von Schmutz, Farben usw. von Druckmaschinen Verwendung finden. Trotz dieser bedeutenden Innovation auf dem Gebiet des Offsetdrucks setzten sich diese Lösemittel an Siebdruckanlagen nicht durch. Aufgrund der dort verwendeten Spezialfarben ist nämlich die Lösekraft dieser Mittel nicht ausreichend, um in einem ökonomisch vertretbaren Zeitaufwand eine Reinigung zu erreichen. Bei an- bzw. eingetrockneten Zweikomponentenfarben versagen diese Mittel vollkommen.

Der Erfindung liegt daher die Aufgabe zugrunde, ein Farbentfernungsmittel anzugeben, das einerseits auf sehr unterschiedlichen Gebieten erfolgreich einsetzbar ist und andererseits wesentliche Anforderungen bezüglich der Schonung von Mensch und Umwelt erfüllt.

Überraschenderweise wurde gefunden, daß diese Aufgabe durch die vorliegende Erfindung gelöst wird.

Gegenstand der Erfindung ist gemäß einer ersten Ausführungsform ein Farbentfernungsmittel, das durch die folgende Zusammensetzung gekennzeichnet ist:
- 20 bis 80: Gew.-teile eines Dicarbonsäuredialkylesters oder eines Gemisches solcher Ester mit 4 bis 6 Kohlenstoffatomen im Dicarbonsäurerest und 1 bis 3 Kohlenstoffatomen in jedem Alkylrest,
- 10 bis 60: Gew.-teile eines 2-(2-Alkoxyethoxy)-ethanols mit 1 bis 4 Kohlenstoffatomen im Alkoxyrest,
- 10 bis 20: Gew.-teile eines Fettalkoholpolyglykolethers,
- 50 bis 120: Gew.-teile eines N-Alkylpyrrolidons mit 1 bis 8 Kohlenstoffatomen im Alkylrest,
- 0 bis 40: Gew.-teile eines Fettsäureesters oder eines Gemisches solcher Ester mit 10 bis 22 Kohlenstoffatomen im Fettsäurerest und 1 bis 8 Kohlenstoffatomen im Alkoholrest,
- 0 bis 30: Gew.-teile eines Verdickungsmittels,
- 0 bis 20: Gew.-teile Orangenterpene,
- 0 bis 20: Gew.-teile 20- bis 25%ige Orthophosphorsäure.

In den Patentansprüchen 2 bis 6 sind bevorzugte Weiterbildungen dieser ersten Ausführungsform der Erfindung angegeben.

Gegenstand der Erfindung gemäß einer zweiten Ausführungsform ist ein Farbentfernungsmittel für ähnliche Einsatzzwecke, insbesondere zum Entfernen von Druckfarben an Sieben und Schablonen für Siebdruckmaschinen, das durch die folgende Zusammensetzung gekennzeichnet ist:
- 20 bis 80: Gew.-teile eines Dicarbonsäuredialkylesters oder eines Gemisches solcher Ester mit 4 bis 6 Kohlenstoffatomen im Dicarbonsäurerest und 1 bis 3 Kohlenstoffatomen in jedem Alkylrest,
- 20 bis 70: Gew.-teile eines 2-(2-Alkoxyethoxy)-ethanols mit 2 bis 4 Kohlenstoffatomen im Alkoxyrest,
- 4 bis 30: Gew.-teile eines Fettalkoholpolyglykolethers,
- 15 bis 40: Gew.-teile eines Fettsäureesters oder eines Gemisches solcher Ester mit 12 bis 18 Kohlenstoffatomen im Fettsäurerest und 1 bis 4 Kohlenstoffatomen im Fettalkoholrest,
- 0 bis 80: Gew.-teile eines Fettsäureesters oder eines Gemisches solcher Ester mit 10 bis 16 Kohlenstoffatomen im Fettsäurerest und 5 bis 10 Kohlenstoffatomen im Fettalkoholrest,
- 0 bis 100: Gew.-teile eines N-Alkylpyrrolidons mit 1 bis 8 Kohlenstoffatomen im Alkylrest sowie
- 0 bis 5: Gew.-teile eines Fettsäureamids.

In den Patentansprüchen 8 bis 11 sind bevorzugte Weiterbildungen dieser zweiten Ausführungsform der Erfindung angegeben.

Die erfindungsgemäßen Farbentfernungsmittel wirken bei verschiedenen Substraten, von denen anhaftende Farben abgelöst werden, auch egalisierend und konditionierend. So ist beispielsweise die Oberfläche einer Betonwand, von der eine Graffiti-Malerei entfernt worden ist, glatter als vor Anwendung des erfindungsgemäßen Mittels. Im Falle der Farbentfernung von einer mit Farbe verkrusteten und verhärteten Gummiwalze einer Siebdruckmaschine oder eines Gummituchs einer Offsetmaschine ist das Gummimaterial anschließend wieder gut elastisch.

Beim Entfernen von Druckfarbe von Sieben und Schablonen an Siebdruckmaschinen zeigt sich insbesondere im Falle von schnelltrocknenden Zweikomponentenfarben die verbesserte und gründlichere Wirkung des erfindungsgemäßen Mittels gegenüber bisher eingesetzten Lösemittelgemischen. Ferner unterliegt das erfindungsgemäße Mittel nicht der Verordnung für brennbare Flüssigkeiten, verdampft bei Raumtemperatur praktisch nicht und kann mit Wasser abgewaschen werden. Durch die Anwendung an Siebdruckmaschinen wird eine spürbare Entlastung der Bedienungspersonen und der Umwelt von Lösemitteldämpfen sowie eine drastische Reduzierung des Brandrisikos erreicht. Die in dem Farbentfernungsmittel enthaltenen Stoffe sind biologisch leicht abbaubar, d.h. es ist bei ihnen keine Bioakkumulation zu erwarten. Das erfindungsgemäße Farbentfernungsmittel kann nach Gebrauch sogar durch einfaches Filtrieren wiederaufbereitet und erneut eingesetzt werden.

Die Beispiele erläutern die Erfindung.

### Beispiel 1

Aus folgenden Komponenten wird ein erstes Farbentfernungsmittel hergestellt:

| | Gew.-teile |
|---|---|
| Kokosfettsäure-2-ethylhexylester | 15 |
| Rapsölmethylester | 11 |
| Butyldiglykol | 26 |
| Dibasic Ester (DBE) | 50 |
| N-Methylpyrrolidon | 82 |
| Fettalkoholpolyglykolether | 16 |

Die Bestandteile werden zusammengegeben und gerührt, bis sie ein klares Gemisch bilden.

Eine noch viel Farbe tragende und verhärtete Gummiwalze aus einer Siebdruckmaschine wird mit diesem Gemisch eingepinselt. Nach etwa 10 Minuten Einwirkzeit wird die Gummiwalze mit Wasser abgespült und trockengerieben. Die Gummiwalze zeigt dann wieder ihre ursprüngliche Farbe und einen matten Schimmer. Der Gummi hat auch seine Elastizität wiedererlangt.

Wenn anstelle der Gummiwalze der Siebdruckmaschine ein benutztes Gummituch einer Offsetmaschine mit dem vorgenannten Gemisch behandelt wird, erhält man den gleichen positiven Effekt.

### Beispiel 2

Aus folgenden Komponenten wird ein zweites Farbentfernungsmittel hergestellt:

| | Gew.-teile |
|---|---|
| Orangenterpene | 10 |
| Methyldiglykol | 30 |
| Dibasic Ester (DBE) | 42 |
| N-Octylpyrrolidon | 104 |
| Fettalkoholpolyglykolether | 10 |

Die einzelnen Bestandteile werden zusammengegeben und gerührt, bis sie ein klares Gemisch bilden.

Eine geriffelte Umlenkwalze aus einem Papier- und Kartonagenwerk mit teilweise bis zu 5 mm dicken, fest angetrockneten Resten von Leim, Farbe und Papier wird mit diesem Gemisch bestrichen. Nach 5 Minuten Einwirkzeit wird die Walze abgebürstet und mit einem Lappen blankgerieben.

Die Umlenkwalze ist von allen Rückständen befreit und zeigt wieder den ursprünglichen Glanz.

### Beispiel 3

Aus folgenden Komponenten wird ein drittes Farbentfernungsmittel hergestellt:

| | Gew.-teile |
|---|---|
| Phosphorsäure, 23%ig | 18 |
| Butyldiglykol | 52 |
| Dibasic Ester (DBE) | 42 |
| N-Methylpyrrolidon | 90 |
| Fettalkoholpolyglykolether | 14 |
| Hochdisperse Kieselsäure | 18 |

Die flüssigen Komponenten werden zusammengegeben und gerührt, bis sie ein klares Gemisch bilden. Dann wird das Verdickungsmittel eingearbeitet. Es entsteht ein pastöses Produkt.

Ein Metallrohr in Form einer Gartenzaunstange mit einem über 2 Jahre alten Farbanstrich und vereinzelten Roststellen wird mit der Paste bestrichen. Nach einer Einwirkzeit von etwa 20 Minuten läßt sich der Farbanstrich ohne Rückstände entfernen. Der Rost hat sich ebenfalls gelöst. Nach der Farbentfernung wird das Rohr mit Wasser abgespült und kann nach dem Trocknen sofort wieder mit Farbe gestrichen werden.

### Beispiel 4

Aus folgenden Komponenten wird ein viertes Farbentfernungsmittel hergestellt:

| | Gew.-teile |
|---|---|
| Kokosfettsäuremethylester | 21 |
| Phosphorsäure, 20%ig | 9 |
| Butyldiglykol | 22 |
| Dibasic Ester (DBE) | 41 |
| N-Methylpyrrolidon | 70 |
| Fettalkoholpolyglykolether | 12 |
| Hochdisperse Kieselsäure | 20 |

Die Komponenten werden zusammengemischt und gerührt, bis sie ein klares Gemisch bilden. Dann wird das Verdickungsmittel ohne Blasenbildung eingearbeitet. Es entsteht ein pastöses Produkt.

Mit diesem Gemisch wird eine Betonwand bestrichen, die eine mindestens einjährige Graffiti-Malerei trägt. Die Dicke des Auftrags der Paste beträgt 1 bis 2 Millimeter.

Nach einer Einwirkzeit von etwa 20 Minuten wird die Fläche mit einem groben Lappen oder einer harten Bürste behandelt und die Farbe entfernt. Die tief in die Poren der Wand eingedrungene Farbe wird anschließend mit einem Hochdruckreinigungsgerät nur mit Wasser herausgespült. Die Farbentfernung gelingt auch vollständig, wenn sofort nach der Einwirkzeit mit dem Hochdruckreiniger gearbeitet wird. Nach dem Trocknen ist die Wand vollständig von der Farbe befreit. Die Wandoberfläche ist glatter als vor der Behandlung. Dadurch wird die Entfernung eines gegebenenfalls neuerlichen Farbauftrags wesentlich erleichtert.

Eine Holzlatte eines Gartenzauns mit einem über zweijährigen Farbanstrich wird mit der obigen Paste bestrichen. Nach einer Einwirkzeit von ca. 20 Minuten wird die Farbe mit einem groben Lappen, einem Besen oder einer Spachtel entfernt. In diesem Falle der Farbentfernung ist kein Abspülen des Farbentferners nötig. Wenn innerhalb von 24 Stunden ein neuer Grundfarbauftrag erfolgt, wird durch die Reste der Farbentfernungspaste sogar ein besserer Verlauf und ein schnelleres Trocknen der Farbe erzielt.

### Beispiel 5

Aus folgenden Komponenten wird ein fünftes Farbentfernungsmittel hergestellt:

| | Gew.-teile |
|---|---|
| Orangenterpene | 20 |
| Phosphorsäure, 25%ig | 12 |
| Butyldiglykol | 55 |
| Dibasic Ester (DBE) | 38 |
| N-Methylpyrrolidon | 80 |
| Fettalkoholpolyglykolether | 20 |
| Hochdisperse Kieselsäure | 14 |

Alle Komponenten werden wie im Beispiel 4 behandelt. Es entsteht eine noch fließfähige Paste.

Mit diesem Gemisch wird ein Markierungsfarbstreifen auf der Oberfläche einer Asphaltstraße eingestrichen. Dies muß an regenfreien Tagen ausgeführt werden, weil das Gemisch partiell wasserlöslich ist. Nach einer Einwirkzeit von etwa 20 Minuten wird die Markierungsfarbe mit einem feuchten Lappen aufgenommen, und die Farbreste werden aus den Poren mit einem Hochdruckreinigungsgerät herausgespült.

Nach dieser Behandlung ist die Markierungsfarbe vollständig von der Asphaltoberfläche entfernt.

### Vergleichsbeispiele 1 und 2

Zum Vergleich mit den erfindungsgemäßen Farbentfernungsmitteln gemäß den Beispielen 1 bis 5 wurden Farbentfernungsmittel gemäß der DE 3438399 (Rezepturbeispiel im Jahrbuch für den Praktiker, Jahrgang 1987, Seiten 105/106) sowie gemäß der Rezeptur "Hausehold Paint Stripper and Varnish Remover" (Rezepturbeispiel im Jahrbuch für den Praktiker, Jahrgang 1989, Seite 58) hergestellt und geprüft.

### Vergleichsbeispiel 1 (gemäß DE 3438399)

| | Gew.-teile |
|---|---|
| Butylglykol | 12 |
| Dibasic Ester (DBE) | 66 |
| Celluloseacetobutyrat | 2 |
| Alkylbenzolsul3fonat | 10 |
| Wasser | 5 |

Bei Anwendung dieser Rezeptur auf die Gummiwalze entsprechend Beispiel 1 gelingt es nicht, die Walze so zu reinigen und zu konditionieren, wie dort beschrieben wurde.

Ebenso negativ verläuft die Anwendung auf die Umlenkwalze, die im Beispiel 2 behandelt wurde.

Die Farbentfernung an dem Metallrohr gemäß Beispiel 3 gelingt zwar, jedoch muß an den Rostflecken eine Nachbehandlung durchgeführt werden.

Auch die Farbentfernung entsprechend Beispiel 4 ist nur unvollständig durchführbar.

Dasselbe gilt für die Entfernung der Straßenmarkierungsfarbe entsprechend Beispiel 5.

### Vergleichsbeispiel 2 (Household Paint Stripper and Varnish Remover)

| | Gew.-teile |
|---|---|
| N-Methylpyrrolidon | 40 |
| n-Butanol | 2 |
| Monoethanolamin | 2 |
| Dibasic Ester (DBE) | 25 |
| Aromaten (Xylol) | 10 |
| Naphthenate (Solvesse 150) | 17,3 |
| Antarox CO-630 (Tensid) | 2 |
| Gafac RE 610 (Tensid) | 0,5 |
| Klucel H (Verdicker) | 1,2 |

Bei der Anwendung dieses Farbentfernungsmittels auf die Gummiwalze entsprechend Beispiel 1 kommt es zu einer sehr starken Quellung des Gummis mit der Folge einer Zerstörung seiner Oberfläche.

Bei der Anwendung auf die Umlenkwalze entsprechend Beispiel 2 wird ein ähnliches Ergebnis wie im Beispiel 2 erreicht.

Ebenso verhält es sich mit dem Metallrohr entsprechend Beispiel 3.

Die Reinigung der Betonwand entsprechend Beispiel 4 gelingt zwar, jedoch zeigt die behandelte Fläche nach dem Trocknen Farbunterschiede und Ränder.

Durch die Anteile an Aromaten und an naphthenischen Verbindungen in der vorgenannten Rezeptur kommt es bei der Behandlung der Straßenmarkierungsfarbe entsprechend Beispiel 5 zu unerwünschten Aufweichungen des Straßenbelags im Bereich des Auftrags des Farbentfernungsmittels.

Durch den hohen Gehalt an Aromaten und Naphthenen in der vorgenannten Rezeptur ist zusätzlich eine Gesundheitsgefährdung der Anwender und der Umwelt gegeben. Es ist aus Untersuchungen an Universitätskrankenhäusern bekannt, daß diese Stoffe das menschliche Zentralnervensystem schädigen.

### Beispiel 6

Aus folgenden Komponenten wird ein sechstes Farbentfernungsmittel hergestellt:

| | Gew.-teile |
|---|---|
| Kokosfettsäure-2-ethylhexylester | 75 |
| Palmkernfettsäuremethylester | 30 |
| 2-(2-Propoxyethoxy)-ethanol | 56 |
| Dipropylsuccinat | 30 |
| Fettalkoholpolyglykolether | 8 |
| Kokosfettsäurediethanolamid | 1 |

Die Komponenten werden zusammengegeben und gerührt, bis sie ein klares Gemisch bilden.

Ein Sieb (40x60 cm²) wurde mit einer Zweikomponentenfarbe für den Siebdruck (z.B. TD-2-KFA, Deckweiß) beaufschlagt und nach einer Trockenzeit von einer Stunde bei Raumtemperatur wie folgt mit dem Farbentfernungsmittel behandelt:
- Aufbringen des Farbentfernungsmittels mit einem Pinsel, drei Minuten Einwirkzeit;
- Einpinseln des Siebes mit wenig Wasser, Dauer eine Minute;
- Spülen des Siebes mit viel Wasser. Dauer zwei Minuten;
- Trocknen des Siebes im Warmluftstrom bei 50°C, Dauer zwei Minuten.

Nach dieser Behandlung ist das Sieb sauber und kann weiterverwendet werden.

### Beispiel 7

Aus folgenden Komponenten wird ein siebtes Farbentfernungsmittel hergestellt:

| | Gew.-teile |
|---|---|
| Palmkernfettsäure-2-ethylhexylester | 50 |
| Kokosfettsäurepropylester | 20 |
| 2-(2-Butoxyethoxy)-ethanol | 25 |
| Dimethylsuccinat | 13 |
| Dimethylglutarat | 41 |
| Dimethyladipat | 10 |
| N-Propylpyrrolidon | 25 |
| Fettalkoholpolyglykolether | 12 |
| Palmkernfettsäurediethanolamid | 4 |

Die Komponenten werden zusammengegeben und gerührt, bis sich ein klares Gemisch bildet.

Das erhaltene Farbentfernungsmittel wird gemäß Beispiel 1 angewandt. Wieder wird ein sauberes Sieb erhalten, das sofort weiterverwendet werden kann.

### Beispiel 8

Aus folgenden Komponenten wird ein achtes Farbentfernungsmittel hergestellt:

| | Gew.-teile |
|---|---|
| Kokosfettsäuremethylester | 24 |
| 2-(2-Butoxyethoxy)-ethanol | 25 |
| Diethyladipat | 49 |
| N-Methylpyrrolidon | 75 |
| Fettalkoholpolyglykolether | 25 |
| Kokosfettsäurediethanolamid | 2 |

Die Komponenten werden zusammengegeben und gerührt, bis sich ein klares Gemisch bildet.

Abweichend gegenüber der Behandlung nach Beispiel 6 und 7 werden als Zweikomponentenfarbe P-Pv 25-A Hokoweiß und der Härter P-H eines anderen Farbherstellers verwendet. Das Sieb sowie eine Schablone werden nach dem Farbauftrag eine Stunde bei 80°C getrocknet. Dann wird das vorgenannte Farbentfernungsmittel gemäß Beispiel 6 und 7 angewandt. Das Ergebnis ist ein sauberes Sieb, welches sofort wiederverwendet werden kann.

### Vergleichsbeispiele 3 und 4

Zum Vergleich mit den erfindungsgemäßen Farbentfernungsmitteln gemäß den Beispielen 6 bis 8 werden Vergleiche mit einem Farbentfernungsmittel konventioneller Art und mit einem Mittel in Anlehnung an WO-A-9 003 419 durchgeführt.

### Vergleichsbeispiel 3

Aus folgenden Komponenten wird ein Farbentfernungsmittel konventioneller Art hergestellt:

| | Gew.-teile |
|---|---|
| Naphthenischer Kohlenwasserstoff (Flammpunkt ca. 60°C) | 180 |
| Xylol | 4 |
| Fettalkoholpolyglykolether | 16 |

Es gelingt durch die Anwendung dieses Mittels nicht, ein nach Beispiel 8 vorbehandeltes Sieb und entsprechend eine Schablone innerhalb von 15 Minuten von der anhaftenden Farbe zu befreien.

### Vergleichsbeispiel 4

Aus folgenden Komponenten wird ein Farbentfernungsmittel in Anlehnung an die obige Patentanmeldung hergestellt:

| | Gew.-teile |
|---|---|
| Palmkernöl | 45 |
| Palmkernfettsäurepropylester | 40 |
| Kokosfettsäuremethylester | 95 |
| Fettalkoholpolyglykolether | 20 |

Es gelingt durch die Anwendung dieses Mittels nicht, ein nach Beispiel 6 oder 7 vorbereitetes Sieb innerhalb von 15 Minuten von der anhaftenden Farbe zu befreien.

## Patentansprüche

1. Farbentfernungsmittel mit gegebenenfalls egalisierender und konditionierender Wirkung gegenüber dem farbtragenden Substrat, gekennzeichnet durch die folgende Zusammensetzung:
20 bis 80 Gew.-teile eines Dicarbonsäuredialkylesters oder eines Gemisches solcher Ester mit 4 bis 6 Kohlenstoffatomen im Dicarbonsäurerest und 1 bis 3 Kohlenstoffatomen in jedem Alkylrest,
10 bis 60 Gew.-teile eines 2-(2-Alkoxyethoxy)-ethanols mit 1 bis 4 Kohlenstoffatomen im Alkoxyrest,
10 bis 20 Gew.-teile eines Fettalkoholpolyglykolethers,
50 bis 120 Gew.-teile eines N-Alkylpyrrolidons mit 1 bis 8 Kohlenstoffatomen im Alkylrest,
0 bis 40 Gew.-teile eines Fettsäureesters oder eines Gemisches solcher Ester mit 10 bis 22 Kohlenstoffatomen im Fettsäurerest und 1 bis 8 Kohlenstoffatomen im Fettalkoholrest,
0 bis 30 Gew.-teile eines Verdickungsmittels,
0 bis 20 Gew.-teile Orangenterpene,
0 bis 20 Gew.-teile 20- bis 25%ige Orthophosphorsäure.

2. Farbentfernungsmittel nach Anspruch 1, dadurch gekennzeichnet, daß die Menge der Dicarbonsäuredialkylesterkomponente 35 bis 55 Gew.-teile beträgt und der Alkylrest darin die Methylgruppe bedeutet.

3. Farbentfernungsmittel nach Anspruch 1 oder 2, dadurch gekennzeichnet, daß die Menge des N-Alkylpyrrolidons 65 bis 110 Gew.-teile beträgt und der Alkylrest die Methyl- oder Octylgruppe bedeutet.

4. Farbentfernungsmittel nach einem der Ansprüche 1 bis 3, dadurch gekennzeichnet, daß die Menge des 2-(2-Alkoxyethoxy)-ethanols 20 bis 55 Gew.-teile beträgt und der Alkoxyrest die Methoxy- oder Butoxygruppe bedeutet.

5. Farbentfernungsmittel nach einem der Ansprüche 1 bis 4, dadurch gekennzeichnet, daß die Menge der Fettsäureesterkomponente höchstens 30 Gew.-teile beträgt und der Alkoholrest darin der Methyl- oder Ethylhexylgruppe entspricht.

6. Farbentfernungsmittel nach einem der Ansprüche 1 bis 5, dadurch gekennzeichnet, daß es als Verdickungsmittel hochdisperse Kieselsäure enthält.

7. Farbentfernungsmittel, insbesondere zum Entfernen von Farben an Sieben und Schablonen von Siebdruckmaschinen, gekennzeichnet durch die folgende Zusammensetzung:
20 bis 80 Gew.-teile eines Dicarbonsäuredialkylesters oder eines Gemisches solcher Ester mit 4 bis 6 Kohlenstoffatomen im Dicarbonsäurerest und 1 bis 3 Kohlenstoffatomen in jedem Alkylrest,
20 bis 70 Gew.-teile eines 2-(2-Alkoxyethoxy)-ethanols mit 2 bis 4 Kohlenstoffatomen im Alkoxyrest,
4 bis 30 Gew.-teile eines Fettalkoholpolyglykolethers,
15 bis 40 Gew.-teile eines Fettsäureesters oder eines Gemisches solcher Ester mit 12 bis 18 Kohlenstoffatomen im Fettsäurerest und 1 bis 4 Kohlenstoffatomen im Fettalkoholrest,
0 bis 80 Gew.-teile eines Fettsäureesters oder eines Gemisches solcher Ester mit 10 bis 16 Kohlenstoffatomen im Fettsäurerest und 5 bis 10 Kohlenstoffatomen im Fettalkoholrest,
0 bis 100 Gew.-teile eines N-Alkylpyrrolidons mit 1 bis 8 Kohlenstoffatomen im Alkylrest,
0 bis 5 Gew.-teile eines Fettsäureamids.

8. Farbentfernungsmittel nach Anspruch 7, dadurch gekennzeichnet, daß der Alkylrest des N-Alkylpyrrolidons 1 bis 4 Kohlenstoffatome, vorzugsweise 1 Kohlenstoffatom, aufweist.

9. Farbentfernungsmittel nach Anspruch 7 oder 8, dadurch gekennzeichnet, daß die Fettsäurereste und Fettalkoholreste aus pflanzlichen Fetten als Rohstoffe mit Jodzahlen von höchstens 20 g I₂/100g stammen.

10. Farbentfernungsmittel nach einem der Ansprüche 7 bis 9, dadurch gekennzeichnet, daß im Fettalkoholpolyglykolether der Fettalkoholrest 8 bis 16 Kohlenstoffatome aufweist sowie der Polyglykoletherrest aus 6 bis 14 Ethoxyeinheiten besteht und gegebenenfalls an seinem Ende einen Alkoxyrest trägt.

11. Farbentfernungsmittel nach einem der Ansprüche 7 bis 10, dadurch gekennzeichnet, daß der Fettsäurerest des Fettsäureamids 8 bis 18 Kohlenstoffatome aufweist.

## Claims

1. Paint remover having optionally levelling and conditioning effect on the paint-carrying substrate, characterized by the following composition:
20 to 80 parts by weight of a dicarboxylic acid dialkyl ester or a mixture of such esters comprising 4 to 6 carbon atoms in the dicarboxylic acid residue and 1 to 3 carbon atoms in each alkyl residue,
10 to 60 parts by weight of a 2-(2-alkoxyethoxy)-ethanol comprising 1 to 4 carbon atoms in the alkoxy residue,
10 to 20 parts by weight of a fatty alcohol polyglycol ether,
50 to 120 parts by weight of an N-alkyl pyrrolidone comprising 1 to 8 carbon atoms in the alkyl residue,
0 to 40 parts by weight of a fatty acid ester or a mixture of such esters comprising 10 to 22 carbon atoms in the fatty acid residue and 1 to 8 carbon atoms in the fatty alcohol residue,
0 to 30 parts by weight of a thickening agent,
0 to 20 parts by weight of orange terpene,
0 to 20 parts by way of a 20 to 25% orthophosphoric acid.

2. Paint remover according to claim 1, characterized in that the amount of the dicarboxylic acid dialkyl ester component ranges from 35 to 55 parts by weight and the alkyl residue therein is the methyl group.

3. Paint remover according to claim 1 or 2, characterized in that the amount of the N-alkyl pyrrolidone ranges from 65 to 110 parts by weight and the alkyl residue is the methyl or octyl group.

4. Paint remover according to one of claims 1 to 3, characterized in that the amount of the 2-(2-alkoxyethoxy)-ethanol ranges from 20 to 55 parts by weight and the alkoxy residue is the methoxy or butoxy group.

5. Paint remover according to one of claims 1 to 4, characterized in that the amount of the fatty acid ester component is 30 parts by weight at the most and the alcohol residue therein corresponds to the methyl or ethylhexyl group.

6. Paint remover according to one of claims 1 to 5, characterized in that it contains a highly dispersed silicic acid as thickening agent.

7. Paint remover, in particular for the removal of paints from sieves and stencils of screen printing machines, characterized by the following composition:
20 to 80 parts by weight of a dicarboxylic acid dialkyl ester or a mixture of such esters comprising 4 to 6 carbon atoms in the dicarboxylic acid residue and 1 to 3 carbon atoms in each alkyl residue,
20 to 70 parts by weight of a 2-(2-alkoxyethoxy)-ethanol comprising 2 to 4 carbon atoms in the alkoxy residue,
4 to 30 parts by weight of a fatty alcohol polyglycol ether,
15 to 40 parts by weight of a fatty acid ester or a mixture of such esters comprising 12 to 18 carbon atoms in the fatty acid residue and 1 to 4 carbon atoms in the fatty alcohol residue,
0 to 80 parts by weight of a fatty acid ester or a mixture of such esters comprising 10 to 16 carbon atoms in the fatty acid residue and 5 to 10 carbon atoms in the fatty alcohol residue,
0 to 100 parts by weight of a N-alkyl pyrrolidone comprising 1 to 8 carbon atoms in the alkyl residue,
0 to 5 parts by weight of a fatty acid amide.

8. Paint remover according to claim 7, characterized in that the alkyl residue of the N-alkyl pyrrolidone comprises 1 to 4 carbon atoms, preferably 1 carbon atom.

9. Paint remover according to claim 7 or 8, characterized in that the fatty acid residues and fatty alcohol residues originate from vegetable fats as raw material having iodine values of 20 g I₂/100 g at the most.

10. Paint remover according to one of claims 7 to 9, characterized in that the fatty alcohol residue of the fatty alcohol polyglycol ether comprises 8 to 16 carbon atoms and the polyglyol ether residue consists of 6 to 14 ethoxy units and optionally carries an alkoxy residue at its end.

11. Paint remover according to one of claims 7 to 10, characterized in hat the fatty acid residue of the fatty acid amide comprises 8 to 18 carbon atoms.

## Revendications

1. Produit décapant pour peinture, présentant le cas échéant un effet d'égalisation et de conditionnement vis-à-vis du substrat portant la peinture, caractérisé par la composition suivante :
20 à 80 parties en poids d'un dialkylester d'acide dicarboxylique, ou bien d'un mélange d'un tel ester avec 4 à 6 atomes de carbone dans le reste acide dicarboxylique et 1 à 3 atomes de carbone dans chaque reste alkyle,
10 à 60 parties en poids d'un 2-(2-alkoxyéthoxy)-éthanol avec 1 à 4 atomes de carbone dans le reste alkoxy,
10 à 20 parties en poids d'un polyglycoléther d'alcool gras,
50 à 120 parties en poids d'un N-alkylpyrrolidone comprenant 1 à 8 atomes de carbone dans le reste alkyle,
0 à 40 parties en poids d'un ester d'acide gras, ou bien d'un mélange d'un tel ester avec 10 à 22 atomes de carbone dans le reste acide gras et 1 à 8 atomes de carbone dans le reste alcool gras,
0 à 30 parties en poids d'un agent épaississant,
0 à 20 parties en poids de terpène d'oranges, et
0 à 20 parties en poids d'acide orthophosphorique à 20 à 25%.

2. Produit décapant pour peinture selon la revendication 1, caractérisé en ce que la quantité de la composante dialkylester d'acide dicarboxylique s'élève entre 35 et 55 parties en poids, et en ce que dans celle-ci le reste alkyle représente le groupe méthyle.

3. Produit décapant pour peinture selon l'une ou l'autre des revendications 1 et 2, caractérisé en ce que la quantité du N-alkylpyrrolidone s'élève entre 65 et 110 parties en poids, et en ce que le reste alkyle signifie le groupe méthyle ou octyle.

4. Produit décapant pour peinture selon l'une des revendications 1 à 3, caractérisé en ce que la quantité du 2-(2-alkoxyéthoxy)-éthanol s'élève entre 20 et 55 parties en poids, et en ce que le reste alkoxy signifie le groupe méthoxy ou butoxy.

5. Produit décapant pour peinture selon l'une des revendications 1 à 4, caractérisé en ce que la quantité de la composante ester d'acide gras s'élève au maximum à 30 parties en poids, et en ce que dans celle-ci le reste alcool correspond au groupe méthyle ou éthylhexyle.

6. Produit décapant pour peinture selon l'une des revendications 1 à 5, caractérisé en ce qu'il contient comme agent épaississant de l'acide silicique fortement dispersé.

7. Produit décapant pour peinture, en particulier pour le décapage de peinture sur des toiles et des pochoirs de machines de sérigraphie, caractérisé par la composition suivante :
20 à 80 parties en poids d'un dialkylester d'acide dicarboxylique, ou d'un mélange d'un tel ester avec 4 à 6 atomes de carbone dans le reste acide dicarboxylique, et 1 à 3 atomes de carbone dans chaque reste alkyle,
20 à 70 parties en poids d'un 2-(2-alkoxyéthoxy)-éthanol avec 2 à 4 atomes de carbone dans le reste alkoxy,
4 à 30 parties en poids d'un polyglycoléther d'alcool gras,
15 à 40 parties en poids d'un ester d'acide gras, ou bien d'un mélange d'un tel ester avec 12 à 18 atomes de carbone dans le reste acide gras et 1 à 4 atomes de carbone dans le reste alcool gras,
0 à 80 parties en poids d'un ester d'acide gras, ou bien d'un mélange d'un tel ester avec 10 à 16 atomes de carbone dans le reste acide gras et 5 à 10 atomes de carbone dans le reste alcool gras,
0 à 100 parties en poids d'un N-alkylpyrrolidone avec 1 à 8 atomes de carbone dans le reste alkyle, et
0 à 5 parties en poids d'un amide d'acide gras.

8. Produit décapant pour peinture selon la revendication 7, caractérisé en ce que le reste alkyle du N-alkylpyrrolidone comprend 1 à 4 atomes de carbone, de préférence 1 atome de carbone.

9. Produit décapant pour peinture selon l'une ou l'autre des revendications 7 et 8, caractérisé en ce que les restes acides gras et les restes alcools gras proviennent de graisses végétales comme produit de départ avec des teneurs en iode maximum de 20 g I₂/100 g.

10. Produit décapant pour peinture selon l'une des revendications 7 à 9, caractérisé en ce que dans le polyglycoléther d'alcool gras, le reste alcool gras présente 8 à 16 atomes de carbone, et le reste polyglycoléther est formé de 6 à 14 unités éthoxy et porte le cas échéant un reste alkoxy à son extrémité.

11. Produit décapant pour peinture selon l'une des revendications 7 à 10, caractérisé en ce que le reste acide gras de l'amide d'acide gras comprend 8 à 18 atomes de carbone.
